(19) Europäisches Patentamt
European Patent Office
Office européen des brevets

(11) **EP 4 553 337 A1**

(12) **EUROPEAN PATENT APPLICATION**

(43) Date of publication:
14.05.2025 Bulletin 2025/20

(21) Application number: 23208927.6

(22) Date of filing: **09.11.2023**

(51) International Patent Classification (IPC):
**F16F 15/08** (2006.01)     **F16F 1/44** (2006.01)
**F16F 3/087** (2006.01)

(52) Cooperative Patent Classification (CPC):
**F16F 1/445; F16F 3/0876; F16F 15/08;**
F16F 2228/007; F16F 2228/06; F16F 2228/08;
F16F 2230/007; F16F 2234/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GE Energy Power Conversion
Technology Limited
Rugby, Warwickshire CV21 1BD (GB)**

(72) Inventor: **GALMICHE, Christophe
54250 CHAMPIGNEULLES (FR)**

(74) Representative: **Casalonga
Casalonga & Partners
Bayerstraße 71/73
80335 München (DE)**

(54) **ANTI-VIBRATION MOUNT FOR MACHINE**

(57)    An anti-vibration mount (5) for machine (1) is proposed.

The anti-vibration mount comprises a first support part (7), a second support part (8) separated from the first support part by a predetermined gap (Gp), and at least a first damping module, the first damping module comprising a first enveloping surface (7b) of the first support part, a first enveloping surface (8b) of the second support part, and a first vibration damping element (10) connecting the first enveloping surface of the first support part and the first enveloping surface of the second support part, the first enveloping surface of the first support part encompassing partially the first vibration damping element and the first enveloping surface of the second support part encompassing partially the first vibration damping element.

**Fig.2**

EP 4 553 337 A1

**Description**

The present invention relates to an anti-vibration mount.

The invention relates more particularly to an anti-vibration mount for a machine such as a motor or a generator.

The document EP 2 267 871 discloses a support structure for a stator of a rotating electric machine.

The support structure minimizes the amount of vibration generated by the rotation of the rotor of the machine transferred into an annular structural member of the machine by decoupling the stator assembly of the machine from the annular structural member using the support structure.

The support structure comprises two mounting plates secured to the annular structural member of the machine, a reaction plate at one end of each mounting plate and an intermediate support member between the two reaction plates.

The intermediate support member is connected to the stator of the machine.

An assembly of various elastomeric layers and interleaved rigid plates connects each reaction plate to the intermediate support member.

As the support structure comprises reactions plates, an intermediate support member and assemblies of various elastomeric layers, and interleaved rigid plates, the number of elements of the support structure is high so that the manufacturing of the support structure is complex.

It is therefore proposed to remedy the disadvantage related to support structures to minimize the transfer of vibrations generated by the rotation of the rotor of a rotating electric machine.

In view of the foregoing the invention proposes a anti-vibration mount for machine.

The anti-vibration mount comprises a first support part, a second support part separated from the first support part by a predetermined gap, and at least a first damping module, the first damping module comprising a first enveloping surface of the first support part, a first enveloping surface of the second support part, and a first vibration damping element connecting the first enveloping surface of the first support part and the first enveloping surface of the second support part, the first enveloping surface of the first support part encompassing partially the first vibration damping element and the first enveloping surface of the second support part encompassing partially the first vibration damping element.

Advantageously, the anti-vibration mount further comprises at least a second damping module comprising a second enveloping surface of the first support part, a second enveloping surface of the second support part and a second vibration damping element connecting the second enveloping surface of the first support part and the second enveloping surface of the second support part, the second enveloping surface of the first support part encompassing partially the second vibration damping element and the second enveloping surface of the second support part encompassing partially the second vibration damping element, the second damping module being adjacent to the first damping module so that a longitudinal axis of the first vibration damping element and a longitudinal axis of the second vibration damping element are parallel, the longitudinal axis extending according to the length of the first and second vibration damping element, the first and second damping modules forming a first damping line.

Preferably, the anti-vibration mount further comprises at least a second damping line comprising at least a first damping module, the first damping module of the second damping line comprising a third enveloping surface of the first support part, a third enveloping surface of the second support part and a third vibration damping element connecting the third enveloping surface of the first support part and the third enveloping surface of the second support part, the third enveloping surface of the first support part encompassing partially the third vibration damping element and the third enveloping surface of the second support part encompassing partially the third vibration damping element, the first damping module of the second damping line being adjacent to the first damping module of the first damping line or to the second damping module of the first damping line so that an longitudinal axis of the third vibration damping element of the first damping module of the second damping line and the longitudinal axis of the first vibration damping element of the first damping module of the first damping line or the longitudinal axis of the second vibration damping element of the second damping module of the first damping line are coaxial, the longitudinal axis of the third vibration damping element extending according to the length of the third vibration damping element.

Advantageously, the first support part comprises a first and a second front surfaces perpendicular to the first enveloping surface of the first support part, and the second support part comprises a first and a second front surfaces perpendicular to the first enveloping surface of the second support part, the vibration damping element of each damping module connecting the first and second surfaces of the first support element and of the second support element.

Preferably, the first and second support parts comprises vertical retaining means configured to compress and maintain compressed the vibration damping element of each damping module between the first support part and the second support part.

Advantageously, the vertical retaining means comprise a plurality of lateral extensions and connecting elements, each support part comprising at least two lateral extensions of the plurality of the lateral extensions extending from the said support part from either side of the said support part so that each lateral extension of the first support part is in front of a lateral extension of the second support part, two lateral extensions of the first and second support parts in front from each other being connected by a connecting element.

Preferably, the lateral extensions of the first support part comprises a through hole, the lateral extensions of the second support part comprise a threaded hole, and each connecting element comprises a screw configured be inserted in the through hole of a lateral extension of the first support part and configured to be engaged in the threaded hole of the lateral extension of the second support part in front of the lateral extension of the first support part.

Advantageously, the anti-vibration mount further comprises stopping means configured to maintain a predefined minimal gap value of the predetermined gap when the damping vibration element is compressed between the first support part and the second support part.

Preferably, the stopping means comprise a plurality of through threaded holes and screws, each screw being configured to engage in a through threaded hole, the first support part comprising the through threaded holes on either side of the sides of the first support part, each screw being engaged in a through threaded hole so that the end of the screw opposed to the head screw faces the second support part.

Advantageously, the first damping module comprises a plane of symmetry passing through the first support part, the second support part and the first vibration damping element, the anti-vibration mount further comprising transversal retaining means configured to limit the relative displacements of the first support part relative to the second support part to a first predetermined value in a first direction parallel to a first normal vector extending from a first side of the plane and a second predetermined value in a second direction parallel to a second normal vector extending form the second side of the plane opposed to the first side.

Preferably, the first support part encompasses partially the second support part on either side of the sides of the second support part, the transversal retaining means comprising threaded holes on either side of the sides of the first support part oriented according to the direction perpendicular to the plane of symmetry and screws, each screw being engaged in a threaded hole so that the end of the screw opposed to the head screw faces the second support part.

Advantageously, each vibration damping element is a vibration damping cylinder and each enveloping surface is cylindrical to fit a vibration damping cylinder.

Preferably, each vibration damping cylinder is a compressed wire mesh knitted cylinder.

Advantageously, each vibration damping cylinder comprises a first portion and a second portion made of steel, and a damping layer made of rubber and connecting the first and the second portions.

Preferably, each vibration damping cylinder comprises a first portion, a second portion, a third portion, a first damping layer made of rubber and a second damping layer made of compressed wire mesh knitted, the first, second and third portions being made of steel, the first damping layer connecting the first portion and the second portion and the second damping layer connecting the second portion and the third portion.

Other characteristics and advantages of the invention will emerge on reading the following description of embodiments of the invention, provided solely by way of non-limiting examples and with reference to the drawings in which:

Figure 1 illustrates an example of rotating electric machine according to the invention,
Figures 2 and 3 illustrates schematically a first example of an anti-vibration mount according to the invention,
Figure 4 and 5 illustrates schematically a second example of the anti-vibration mount according to the invention,
Figure 6 illustrates schematically a third example of the anti-vibration mount according to the invention,
Figure 7 illustrates schematically a fourth example of the anti-vibration mount according to the invention,
Figure 8 illustrates schematically fifth example of the anti-vibration mount according to the invention,
Figure 9 illustrates schematically another example of the vibration damping cylinder according to the invention,
Figure 10 illustrates schematically another example of the vibration damping cylinder according to the invention,
Figure 11 illustrates schematically a sixth example of the anti-vibration mount according to the invention,
Figures 12 and 13 illustrates schematically a seventh example of the anti-vibration mount according to the invention,
Figure 14 illustrates schematically an eighth example of the anti-vibration mount according to the invention,
Figure 15 illustrates schematically a ninth example of the anti-vibration mount according to the invention,
Figures 16 and 17 illustrates schematically other examples of the anti-vibration mount according to the invention, and
Figure 18 illustrates schematically a stator frame according to the invention.

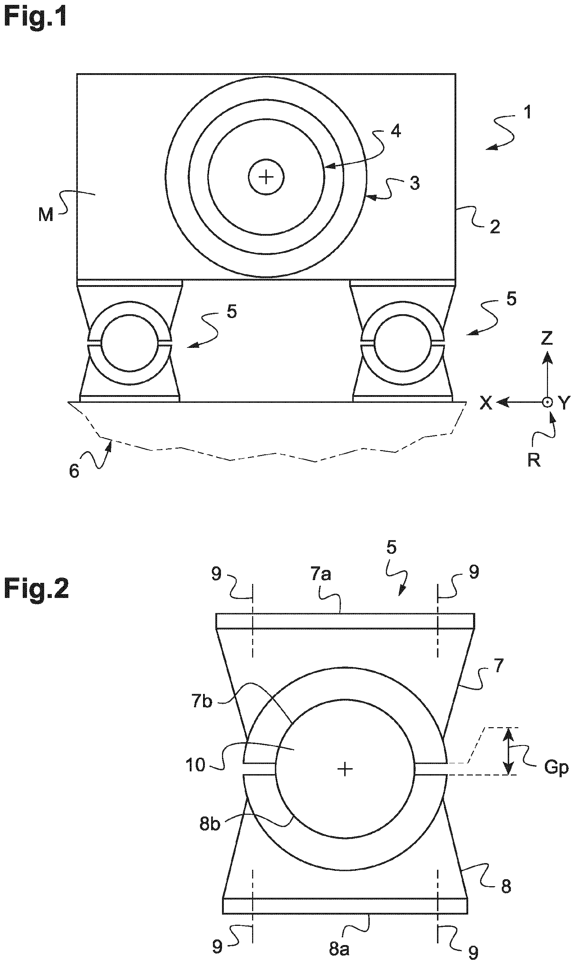

Figure 1 illustrates an example of a rotating electric machine 1.

The rotating electric machine 1 comprises a casing 2, a stator 3 and a rotor 4.

The rotor 4 is inserted in the stator 3 and the stator 3 is lodged in the casing 2.

The casing 2 rests on a first end of anti-vibration mounts 5.

The second end of the anti-vibration mounts 5 rests for example on an upper surface of the foundations 6 of a factory or on foundations of a boat (not represented).

A direct reference R is defined.

The reference R is fixed relative to the foundations 6 and comprises an axis X and an axis Y included in the upper surface of the foundations 6, and an axis Z perpendicular to the upper surface of the foundations 6.

The axis X is parallel to the transversal direction of the anti-vibration mount 5, the axis Y is parallel to the longitudinal direction of the anti-vibration mount 5 and the axis Z is parallel to the vertical direction of the anti-vibration mount 5.

The anti-vibration mount 5 may be used to support other types of machine than rotating electric machines.

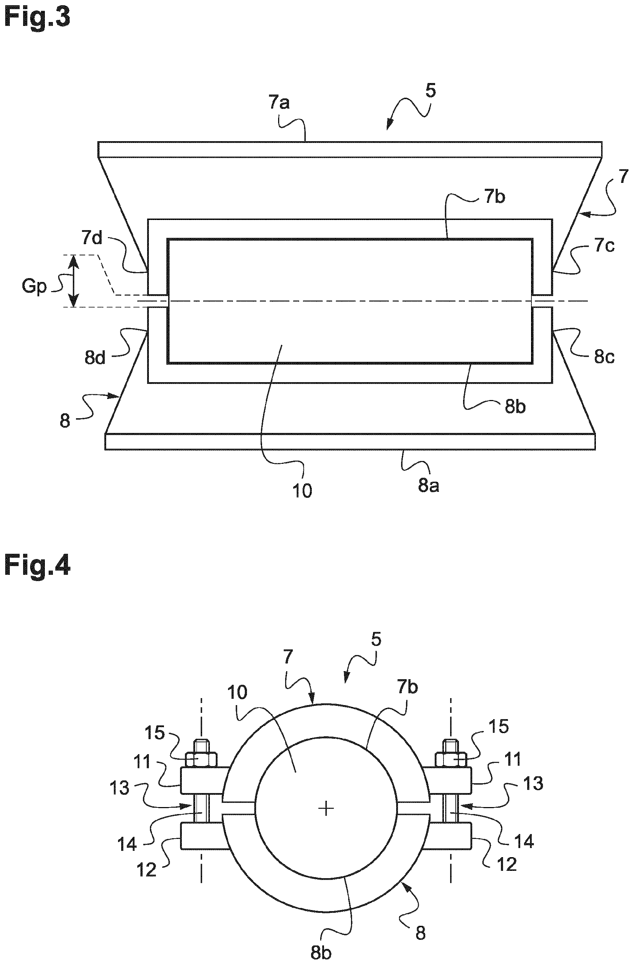

Figures 2 and 3 illustrate schematically a front view and a side view of a first example of the anti-vibration mount 5.

The anti-vibration mount 5 comprises a first support part 7, a second part 8 separated from the first support part 7 by a predetermined gap Gp.

The first end 7a of the first support part 7 comprises for example threaded holes 9 so that screws (not represented) engaged in the holes 9 maintain the casing 2 on the anti-vibration mount 5.

Similarly, the first end 8a of the second support part 8 comprises for example threaded holes 9 so that screws (not represented) engaged in the holes 9 maintain the anti-vibration mount 5 on the foundations 6.

The first support part 7 comprises at a second end a first enveloping surface 7b and the second support part 8 comprises at a second end a first enveloping surface 8b.

The anti-vibration mount 5 further comprises a first vibration damping element 10 connecting the first enveloping surface 7b of the first support part 7 and the first enveloping surface 8b of the second support part 8.

The first enveloping surface 7b of the first support part 7 encompasses partially the first vibration damping element 10 and the first enveloping surface 8b of the second support part 8 encompasses partially the first vibration damping element 10.

A surface may encompass partially a vibration element so that an angular sector defined by the surface has an angle equal for example to 120°, 175° or less than 180° in order to create the gap Gp.

The first enveloping surface 7b of the first support part 7, the first enveloping surface 8b of the second support part 8 and the first vibration damping element 10 form a first damping module.

The first enveloping surfaces 7b, 8b fit the first vibration damping element 10.

The anti-vibration mount 5 minimizes the amount of vibrations generated by the rotating electric machine 1 and transferred into the foundations 6 by decoupling the rotating electric machine 1 from the foundation 6.

The anti-vibration mount 5 comprises a few numbers of elements so that the anti-vibration mount 5 is easy to manufacture and to implement.

As the first vibration damping element 10 is encompassed by the first enveloping surfaces 7b, 8b, the first vibration damping element 10 is maintained in the anti-vibration mount 5.

The value of the predetermined gap Gp is chosen so that when the gap Gp is null, the first vibration damping element 10 compressed by the first enveloping surfaces 7b, 8b is not deteriorate.

The first and second support parts 7, 8 are preferably made in steel.

The first vibration damping element 10 has an elasticity modulus less than ten times the Young modulus of steel or metallic support, preferably less than hundred times the Young modulus of steel, the Young modulus of steel being greater than 200000 MPa, for example equal to 210000 MPa.

The first vibration damping element 10 is for example made from rubber.

As represented, the first vibration damping element 10 is a vibration damping cylinder.

In the following, it is assumed that the first vibration damping element 10 is a vibration damping cylinder.

In a first embodiment of the vibration damping cylinder, the vibration damping cylinder is made of rubber.

In a second embodiment of the vibration damping cylinder, the vibration damping cylinder is a compressed wire mesh knitted cylinder.

The vibration damping element 10 made of compressed wire mesh knitted resists to high temperatures, for example above 80 °C, contrary to a vibration damping element 10 made of rubber.

The first enveloping surfaces 7b, 8b are cylindrical.

Further, when the foundations 6 is not parallel to the surface of the casing 2 in contact with the first end of the anti-vibration mounts 5, the vibration damping cylinder and the first enveloping surfaces 7b, 8b may rotate according to a central axis of the said cylinder to compensate the lack of parallelism so that the vibration damping cylinder is not torsional constrained.

The first support part 7 further comprises a first front surface 7c and a second front surface 7d perpendicular to the first enveloping surface 7b of the first support part 7, and the second support part 8 further comprises a first front surface 8c and a second front surface 8d perpendicular to the first enveloping surface 8b of the second support part 8.

The first vibration damping element 10 connects the first and second front surfaces 7c, 7d of the first support element 7, and the first and second front surfaces 8c, 8d of the second support element 8.

The first and second front surfaces 7c, 7d, 8c, 8d form stops so that the first vibration damping element 10 cannot escape from the anti-vibration mount 5 in the longitudinal direction of the anti-vibration mount 5

The first and second front surfaces 7c, 7d, 8c, 8d may be formed by reported or fixed elements so that the reported elements are dismountable, the stops being removable. Maintenance of the first vibration damping element 10 is possible by removing the reported elements, for example to remove and replace the first damping element 10.

In another variant, the first support part 7 and the second support part 8 may not comprise the first and second surfaces.

Figure 4 illustrates schematically a partial front view of a second example of the anti-vibration mount 5.

The first and second support parts 7, 8 are partially represented and the vibration damping cylinder is inserted between the first and second support parts 7, 8.

The first and second support parts 7, 8 comprises vertical retaining means.

The vertical retaining means compress and maintain compressed the vibration damping element 10 of each damping module between the first support part 7 and the second support part 8.

The vertical retaining means allow to applied a preload on the vibration damping element 10 for example to ease the mounting of the machine 1 on the anti-vibration mounts 5 so that the vibration damping element 10 does not sag under the effect of the mass of the machine 1.

The vertical retaining means comprise a plurality of lateral extensions 11, 12 and connecting elements 13.

The first support part 7 comprises lateral extensions 11 extending from either side of the first support part 7 and the second support part 8 comprises lateral extensions 12 extending from either side of the second support part 8 so that each lateral extension 11 of the first support part 7 is in front of a lateral extension 12 of the second support part 8.

Two lateral extensions 11, 12 of the first and second support parts 7, 8 in front from each other being connected by a connecting element 13.

The lateral extensions 11 of the first support part 7 may comprise through holes, the lateral extensions 12 of the second support part 8 may comprise taped holes and the connecting elements 13 may comprise a screw 14.

Each screw 14 is inserted in the through hole of a lateral extension 11 of the first support part 7 and engaged in the threaded hole of a lateral extension of the second support part 8 in front of the said lateral extension 11 of the first support part 7.

Each connecting elements 13 further comprise a nut 15 in contact with a lateral extension 11 of the first support part 7.

When the anti-vibration mount 5 is inserted between the casing 2 and the foundations 6, and secured to the casing 2 and the foundations 6, the nut 15 is released so that the support part 1 may be move relative to the second support part 8.

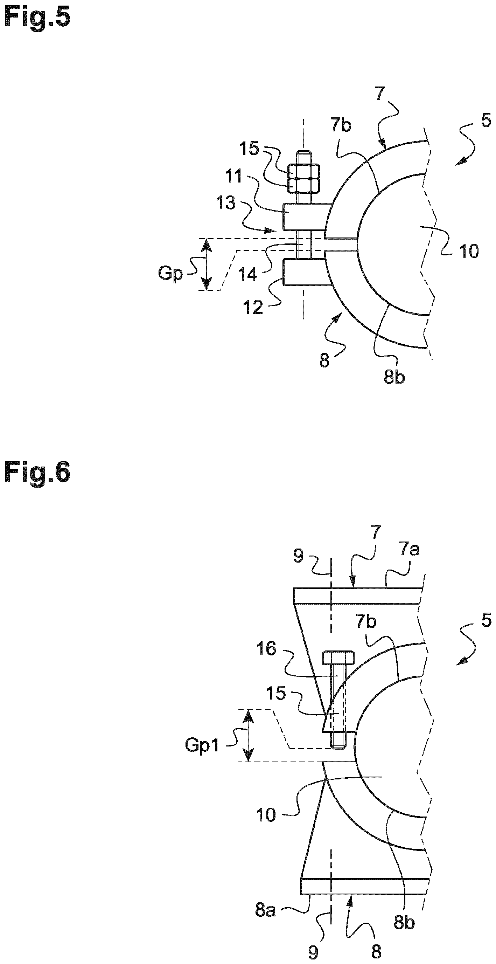

The nut 15 may be released from a predetermined length between the nut 15 and the lateral extension 11 of the first support 7 so that the nut 15 forms a stop as represented on figure 5 when the lateral extension 11 of the first support part 7 comes in contact with the nut 15.

The stop prevents excessive relative movement between the machine 1 and the foundations 6 in the vertical direction when the gap Gp between the first and second support parts 7, 8 is increasing.

In variant, the screw 14 comprises a screw head in contact with a lateral extension 11 of the first support part 7, the screw is released when the anti-vibration mount 5 is inserted between the casing 2 and the foundations 6.

Figure 6 illustrates schematically a partial front view of a third example of the anti-vibration mount 5.

The first and second support parts 7, 8 are represented and the vibration damping cylinder is inserted between the first and second support parts 7, 8.

The anti-vibration mount 5 comprises stopping means to maintain a predefined minimal gap value Gp1 of the predetermined gap when the damping vibration element 10 is compressed between the first support part 7 and the second support part 8.

The predefined minimal gap value Gp1 prevents excessive compression of the damping vibration element 10 between the first and second support parts 7, 8.

The stopping means may comprise a plurality of through threaded holes 15 and screws 16.

The through threaded holes 15 are localized on either side of the sides of the first support part 7.

Each screw 16 is engaged in a through threaded hole 15 so that the end of the screw 16 opposed to the head screw 16 faces the second support part 8.

When the first support part 7 compresses the damping vibration element 10, the end of the screw 16 opposed to the head screw 16 may come in contact with the second support part 8 so that the damping vibration element 10 is not more compressed by the support parts 7, 8. The predefined minimal gap value Gp1 is adjustable by tightening and loosening the screws 16 in the holes 15.

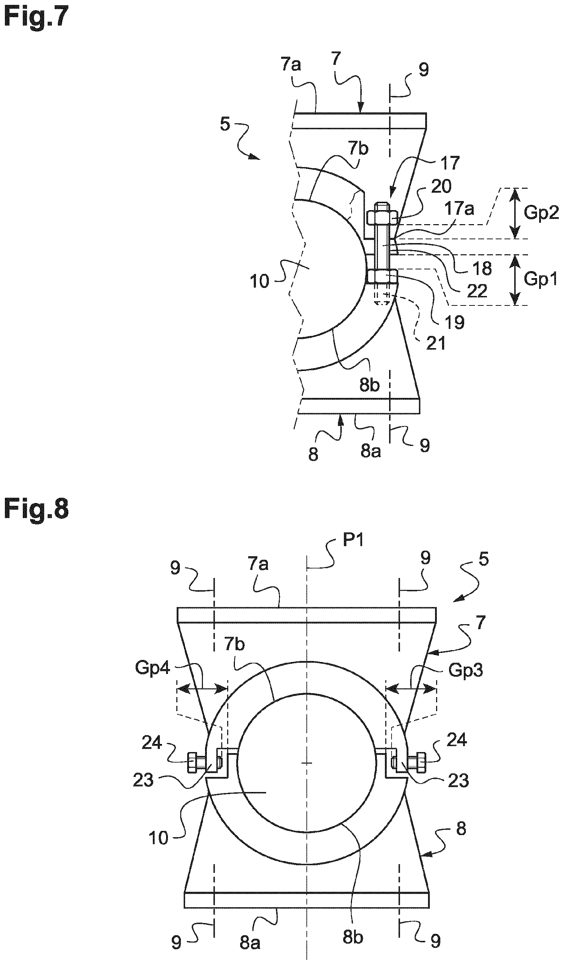

Figure 7 illustrates schematically a partial front view of a fourth example of the anti-vibration mount 5.

The first and second support parts 7, 8 are partially represented and the vibration damping cylinder is inserted between the first and second support parts 7, 8.

The fourth example of the anti-vibration mount 5 comprises another example of the stopping means.

The fist support part 7 of the anti-vibration mount 5 may comprise a recess 17 comprising a surface 17a.

The stopping means comprise a plurality of threaded shaft 18, nuts 19, 20, threaded holes 21 on either side of the sides of the second support part 8 and through holes 22 on either side of the sides of the first support part 7.

Each threaded hole 21 is coaxial with a through hole 22.

A first end of each threaded shaft 18 is engaged in a threaded hole 21 and goes through the through hole 22 coaxial with the threaded hole 21, a first nut 19 is engaged with the said threaded shaft 18 so that one face of the first nut 19 is in contact with the second support part 8.

The second nut 20 is engaged with the said threaded shaft 18 so one face of the second nut 20 is in contact with the surface 17a of the recess 17.

The first support is between both nuts 19, 20.

The first nuts 19 form first stops to prevent excessive compression of the vibration damping element 10 (gap Gp1) and the second nut 20 form second stops to prevent excessive relative movement between the machine 1 and the foundations 6 in a direction perpendicular (gap Gp2) to the surface of the casing 2 in contact with the first end of the first support part 7 when the gap Gp1 between the first and second support parts 7, 8 is increasing.

Figure 8 illustrates schematically a partial front view of a fifth example of the anti-vibration mount 5.

The first and second support parts 7, 8 are represented and the vibration damping cylinder is inserted between the first and second support parts 7, 8.

The first support part 7 encompasses partially the second support part 8 on either side of the sides of the second support part 8.

The anti-vibration mount 5 comprises a plane of symmetry P1 passing through the first support part 7, the second support part 8 and the first vibration damping element 10.

The anti-vibration mount 5 further comprising transversal retaining means to limit the relative displacements of the first support 7 part relative to the second support part 8 to predetermined values in a direction perpendicular to the plane of symmetry P1 (the transversal direction of the anti-vibration mount 5).

The relative displacement of the first support part relative to the second support part is limited to a first predetermined value Gp3 in a first direction parallel to a first normal vector extending from a first side of the plane of symmetry P1 and to a second predetermined value Gp4 in a second direction parallel to a second normal vector extending from the second side of the plane of symmetry P1 opposed to the first side.

The transversal retaining means prevent excessive displacement of the first support part 7 relative to the second support part 8 to limit the deformation of the first vibration damping element 10 in the transversal direction so that the first vibration damping element 10 does not shear.

The transversal retaining means may comprise threaded holes 23 on either side of the sides of the first support part 7 oriented according to the direction perpendicular to the plane of symmetry P1 and screws 24.

Each screw 24 is engaged in a threaded hole 23 so that the end of the screw 24 opposed to the head screw faces the second support part 8. The screws 24 are not in contact with the second support part 8 so that gaps Gp3 and Gp4 are defined between the first and second support parts 7, 8.

When the casing 2 is moving in the transversal direction, the end of the screw 24 opposed to the head screw engaged in a threaded hole 23 on the side of the first support part 7 opposed to the transversal direction may come in contact with the second support part 8 forming a stop to limit the displacement of the first vibration damping element 10 in the transversal direction.

The gaps Gp3 and Gp4 may be adjusted by screwing/unscrewing the screws 24 to limit the relative displacement of the first and second support parts 7, 8 with two different values of the gaps Gp3 and Gp4.

In a variant, the anti-vibration mount 5 may two means of the transversal retaining means, stopping means and vertical retaining means as described above, or may comprise transversal retaining means, stopping means and vertical retaining means as described above.

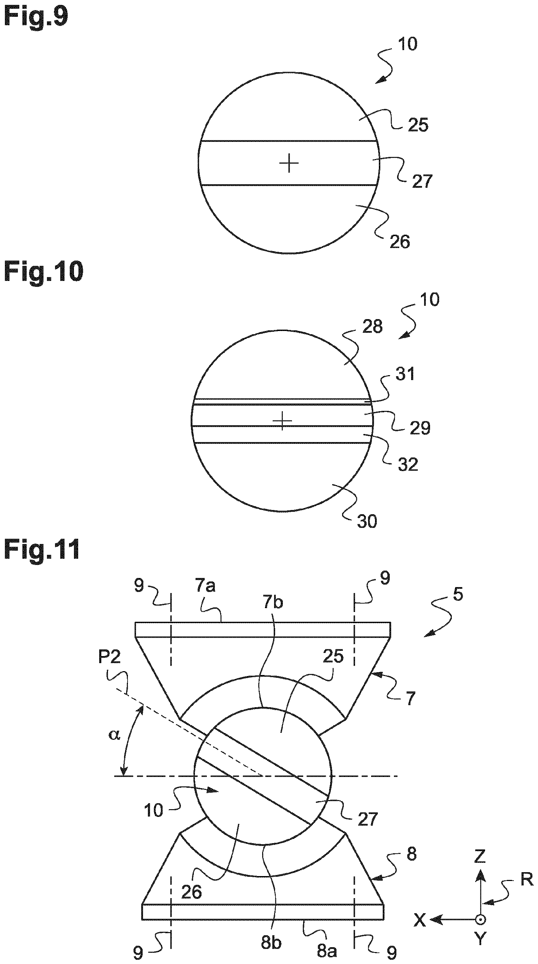

Figure 9 illustrates schematically a third embodiment of the vibration damping cylinder.

The vibration damping cylinder 10 comprises a first portion 25 and a second portion 26 made of steel, and a damping layer 27 made for example of rubber and connecting the first and the second portions 25, 26.

Compared to the first embodiment of the vibration damping cylinder made of rubber, the quantity of rubber needed to obtain the third embodiment of the vibration damping cylinder is reduced while the damping coefficient of the vibration damping cylinder is not affected.

Figure 10 illustrates schematically a fourth embodiment of the vibration damping cylinder.

The vibration damping cylinder 10 comprises a first portion 28, a second portion 29, a third portion 30, a first damping layer 31 made for example of rubber and a second damping layer 32 made for example of compressed wire mesh knitted.

The first, second and third portions 28, 29, 30 are made of steel or metal.

The first damping layer 31 connects the first portion 28 and the second portion 29.

The second damping layer 32 connects the second portion 29 and the third portion 30.

The second damping layer 32 made of compressed wire mesh knitted allows to increase the damping coefficient of the fourth embodiment of the vibration damping cylinder is increased compared to the third embodiment of the vibration damping cylinder. The thickness of the first damping layer 31 may be smaller than the thickness of the second damping layer 32 to limit the rubber creeping over the time.

Figure 11 illustrates schematically a sixth example of the anti-vibration mount 5.

The first and second support parts 7, 8 are represented and the vibration damping cylinder 10 according to the third embodiment of the vibration damping cylinder is inserted between the first and second support parts 7, 8.

The vibration damping cylinder 10 comprises a plane P2. The plane P2 includes the central axis of the vibration damping cylinder 10 and divides the damping layer 27 in two identical parts.

An angle α is defined between the plane P2 and the axis X of the reference R parallel to the transversal direction of the anti-vibration mount 5.

As the vibration damping cylinder 10 is not made of a homogenous material, the stiffness of the anti-vibration mount in the transversal direction (X axis) and the vertical direction (Y axis) depend on the value of the angle α.

The stiffness of the anti-vibration mount in the transversal direction $K_T$ is approximated by:

$$K_T = (0.2 + 0.8 \sin \alpha)K \quad (1)$$

and the stiffness of the anti-vibration mount in the vertical direction Kv is approximated by:

$$K_V = (0.2 + 0.8 \cos \alpha)K \quad (2)$$

where K is the stiffness the damping layer 27 in the Z axis (compression).

The stiffnesses $K_T$ and Kv of the anti-vibration mount 5 may be adjusted by rotating the vibration damping cylinder 10 which modifies the angle α.

The natural frequency in Hertz of the anti-vibration mount 5 is equal to:

$$Fo = \frac{1}{2\pi}\sqrt{\frac{K}{M}} \quad (3)$$

where M is the mass of the electric machine 1 and K is the stiffness of the anti-vibration mounts 5 fixed to the machine 1 in the vertical direction ($K_V$) or the transversal direction ($K_T$).

When the values of stiffnesses $K_T$ and Kv are determined to increase the suspension natural frequency of the casing 2, an angle α1 may be determined according to the determined values of stiffnesses $K_T$ and $K_V$, and the position of the vibration damping cylinder 10 may be adjusted by rotating the vibration damping cylinder 10 in the enveloping surfaces 7a, 8a until the angle α is equal to the angle α1.

Advantageously, the suspension natural frequency may be adjusted by the rotating the cylinder 10. The cylinder 10 needs not to be replaced with a cylinder having another stiffness to modify the stiffness and to modify the suspension natural frequency.

In addition, the rotation of the cylinder 10 may increase the maintaining of the casing 2 in the transversal direction.

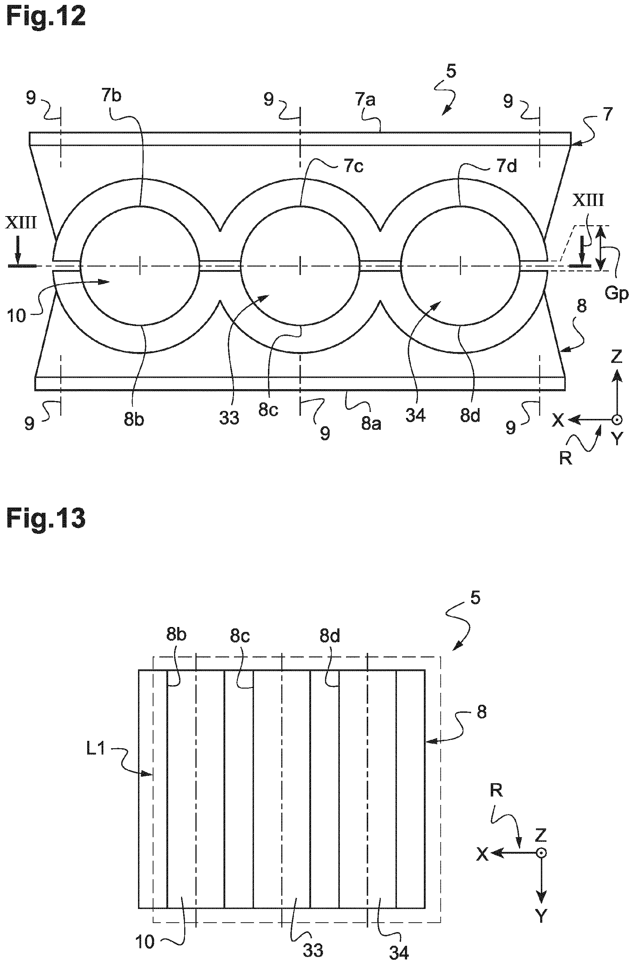

Figures 12 and 13 illustrate schematically a front view and a transversal cross section according to the direction XIII - XIII of an seventh example of the anti-vibration mount 5.

The anti-vibration mount 5 comprises a first damping line L1 comprising the first damping module, a second damping module and a third damping module.

The first support part 7 comprise the first enveloping surface 7b, a second enveloping surface 7c and a third enveloping surface 7d.

The second support part 8 comprise the first enveloping surface 8b, a second enveloping surface 8c and a third enveloping surface 8d.

A second vibration damping element 33 connects the second enveloping surface 7c of the first support part 7 and the second enveloping surface 8c of the second support part 8, and a third vibration damping element 34 connects the third enveloping surface 7d of the first support part 7 and the third enveloping surface 8d of the second support part 8.

The second enveloping surface 7c of the first support part 7 encompasses partially the second vibration damping element 33 and the second enveloping surface 8c of the second support part 8 encompasses partially the second vibration damping element 33.

The third enveloping surface 7d of the first support part 7 encompasses partially the third vibration damping element 34 and the third enveloping surface 8d of the second support part 8 encompasses partially the third vibration damping element 34.

The first vibration damping element 10, second vibration damping element 33 and third vibration damping element 34 are identical and may comprise the vibration damping cylinders made of rubber or of compressed wire mesh knitted.

Each of the first, second and third vibration damping elements 10, 33, 34 is a vibration damping cylinder made for example of rubber.

The second enveloping surface 7c of the first support part 7, the second enveloping surface 8c of the second support part 8 and the second vibration damping element 33 form the second damping module of the first damping line L1.

The third enveloping surface 7d of the first support part 7, the third enveloping surface 8d of the second support part 8 and the third vibration damping element 34 form the third damping module of the first damping line L1.

The second damping module is adjacent to the first damping module and the third damping element is adjacent to the second damping module so that a longitudinal axis of the first vibration damping element 10, a longitudinal axis of the second vibration damping element 33 and a longitudinal axis of the third vibration damping element 34 are parallel.

The longitudinal axis extends according to the length of the first, the second and the third vibration damping elements.

As the first, the second and the third vibration damping elements 10, 33, 34 are vibration damping cylinders, the longitudinal axis are a central axis of the first, the second and the third vibration damping elements 10, 33, 34.

The anti-vibration mount 5 comprises the first, second and third damping modules supports three times the load supported by the anti-vibration mount 5 comprising only the first damping module.

As the damping modules are identical, the realisation of the anti-vibration mount 5 comprising a plurality of damping modules is eased.

Further, producing and implementing an anti-vibration mount 5 comprising three damping modules is easier than producing and implementing three anti-vibration mounts 5, each comprising one damping module.

The first damping line L1 may comprise two or more than three damping modules, the number of damping modules being defined according to the load supported by one damping module, the number of anti-vibration mounts 5 and the load of the machine 1 supported by the anti-vibration mounts 5.

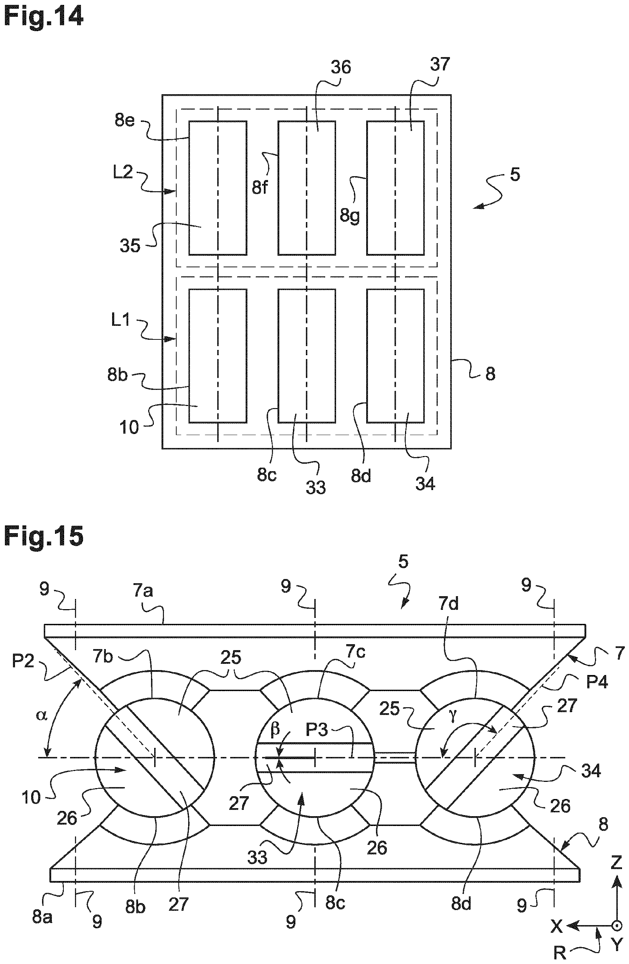

Figure 14 illustrates schematically a transversal cross section according to the direction XIII - XIII on figure 12 of a eighth example of the anti-vibration mount 5.

The anti-vibration mount 5 comprises the first damping line L1 comprising the first, second and third damping modules according to the seventh example of the anti-vibration mount 5 illustrated on figures 12 and 13.

The anti-vibration mount 5 further comprises a second damping line L2 comprising a first, a second and a third damping modules.

The first support part 7 further comprise a fourth, fifth and sixth enveloping surfaces (not represented).

The second support part 8 further comprise a fourth enveloping surface 8e, a fifth enveloping surface 8f and a sixth enveloping surface 8g.

A fourth vibration damping element 35 connects the fourth enveloping surface of the first support part 7 and the fourth enveloping surface 8e of the second support part 8, a fifth vibration damping element 36 connects the fifth enveloping surface of the first support part 7 and the fifth enveloping surface 8f of the second support part 8 and a sixth vibration damping element 37 connects the sixth enveloping surface of the first support part 7 and the sixth enveloping surface 8g of the second support part 8.

The first, second, third, fourth, fifth and sixth vibration damping elements 10, 33, 34, 35, 36, 37 are identical.

The fourth enveloping surface of the first support part 7 encompasses partially the fourth vibration damping element 35 and the fourth enveloping surface 8e of the second support part 8 encompasses partially the fourth vibration damping element 35.

The fifth enveloping surface of the first support part 7 encompasses partially the fifth vibration damping element 36 and the fifth enveloping surface 8f of the second support part 8 encompasses partially the fifth vibration damping element 36.

The sixth enveloping surface of the first support part 7 encompasses partially the sixth vibration damping element 37 and the sixth enveloping surface 8g of the second support part 8 encompasses partially the sixth vibration damping element 37.

The first vibration damping element 10, second vibration damping element 33, third vibration damping element 34, fourth damping element 35, fifth damping element 36 and sixth damping element 37 are identical and may comprise the vibration damping cylinders made of rubber or of compressed wire mesh knitted.

The fourth enveloping surface of the first support part 7, the fourth enveloping surface 8e of the second support part 8 and the fourth vibration damping element 35 form the first damping module of the second damping line L2.

The fifth enveloping surface of the first support part 7, the fifth enveloping surface 8f of the second support part 8 and the fifth vibration damping element 36 form the second damping module of the second damping line L2.

The sixth enveloping surface of the first support part 7, the sixth enveloping surface 8g of the second support part 8 and the sixth vibration damping element 37 form the third damping module of the second damping line L2.

Each damping module of the second damping line L2 is adjacent to a damping module of the first damping line L1 so that the longitudinal axis of the said damping module of the second damping line L2 is for example coaxial with the longitudinal axis of the said damping module of the first damping line L1.

The longitudinal axis of the first damping module of the second damping line L2 is for example coaxial with the longitudinal axis of the first damping module of the first damping line L1, the longitudinal axis of the second damping module of the second damping line L2 is for example coaxial with the longitudinal axis of the second damping module of the first damping line L1 and the longitudinal axis of the third damping module of the second damping line L2 is for example coaxial with the longitudinal axis of the third damping module of the first damping line L1.

The anti-vibration mount 5 may comprise more than two damping lines L1, L2, each damping line comprising at least one damping module.

The number of damping line(s) is determined according to the mass of the machine 1, the number of anti-vibration mounts 5 supporting the machine 1 and the load supported by each vibration damping element 10, 33, 34, 35, 36, 37.

As the damping modules are identical, the realisation of the anti-vibration mount 5 comprising a plurality of damping modules is eased.

The natural frequency of the anti-vibration mount 5 may be tuned by removing at least one vibration damping element 10, 33, 34, 35, 36, 37 since the stiffness of the anti-vibration mount 5 is tuned by removing at least one vibration damping element.

The structure of the first and second damping lines L1, L2 allows to easily tuning the natural frequency of the anti-vibration mount 5 by removing one or more vibration damping element 10, 33, 34, 35, 36, 37.

Figure 15 illustrates schematically a front view of a ninth example of the anti-vibration mount 5.

This example differs from the eighth example of the anti-vibration mount 5 illustrated in figures 12 and 13 in that each of the first, second and third vibration damping elements 10, 33, 34 is a vibration damping cylinder according to the third embodiment illustrated in figure 9.

Each of the first, second and third vibration damping elements 10, 33, 34 comprises the first portion 25 and the second portion 26 made of steel or metal, and the damping layer 27 made of rubber or compressed wire mesh knitted and connecting the first and the second portions 25, 26.

The second vibration damping cylinder 33 comprises a plane P3 including central axis of the second vibration damping cylinder 33 and dividing the damping layer 27 of the second vibration damping cylinder 33 in two identical parts.

An angle β is defined between the plane P3 and the axis X of the reference R parallel to the transversal direction of the anti-vibration mount 5.

The third vibration damping cylinder 34 comprises a plane P4 including central axis of the third vibration damping cylinder 34 and dividing the damping layer 27 of the third vibration damping cylinder 34 in two identical parts.

An angle γ is defined between the plane P4 and the axis X of the reference R parallel to the transversal direction of the anti-vibration mount 5.

As illustrated on figure 15, the angles α, β, γ have different values so that the vertical and transversal stiffnesses of each vibration damping cylinder 10, 33, 34 are different allowing to tune the natural frequency of the anti-vibration mount 5 or to tune the vertical and transversal stiffness of the machine 1 vertical or transversal fastening.

Similarly, the vibration damping elements 10, 33, 34, 35, 36, 37 of the ninth example of the anti-vibration mount 5 illustrated on figure 14 are vibration damping cylinders according to the third embodiment illustrated in figure 9 allowing to rotate each vibration damping elements 10, 33, 34, 35, 36, 37 according to the X axis to tune the natural frequency of the anti-vibration mount 5 or the machine 1 fastening between the Z axis and the X axis.

In another embodiment, each of the first, second and third vibration damping elements 10, 33, 34 is a vibration damping cylinder according to the fourth embodiment illustrated in figure 10.

In another embodiment each vibration damping elements 10, 33, 34, 35, 36, 37 of the ninth example of the anti-vibration mount 5 illustrated on figure 14 is a vibration damping cylinder according to the fourth embodiment illustrated in figure 10.

The vibration damping element 10 may be not cylindrical.

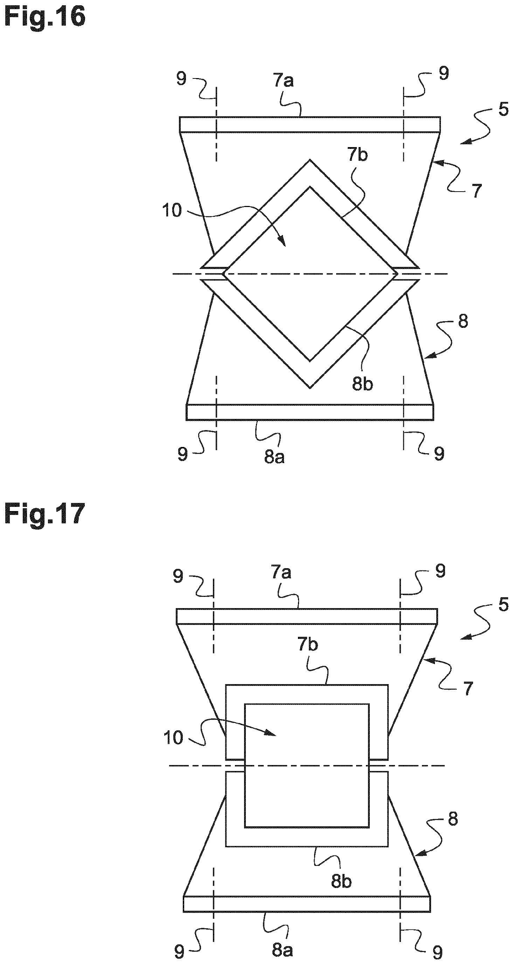

The section of vibration damping element 10 may be different form a circular section. As illustrated on figures 16 and 17, the section of the vibration damping element 10 may be a diamond or square (figure 16) or a square (figure 17).

The first enveloping surface 7b of the first support part 7 and the first enveloping surface 8b of the second support part 8 fit the section of the vibration damping element 10.

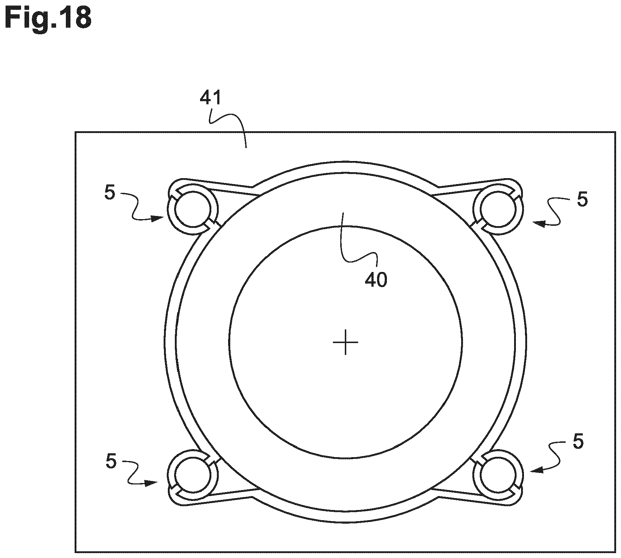

As illustrated on figure 18, the anti-vibration mounts 5 may connect a stator frame 40 of the rotating electric machine 1 to an annular supporting structure 41.

In another embodiment, the determination of the natural frequency according to equation (3) may take into account the damping of the vibration damping element.

In another embodiment, the stiffnesses of the vibration damping cylinder may be adjusted by active systems, for example electromagnetic stiffness systems or coils systems feed with variable electric supply means. The suspension natural frequency of the machine 1 may be tuned.

Further, the machine 1 fastening in vertical and transversal directions may be tuned.

## Claims

1. Anti-vibration mount (5) for machine (1), **characterized in that** the anti-vibration mount (5) comprises a first support part (7), a second support part (8) separated from the first support part by a predetermined gap (Gp), and at least a first damping module, the first damping module comprising a first enveloping surface (7b) of the first support part, a first enveloping surface (8b) of the second support part, and a first vibration damping element (10) connecting the first enveloping surface of the first support part and the first enveloping surface of the second support part, the first enveloping surface of the first support part encompassing partially the first vibration damping element and the first enveloping surface of the second support part encompassing partially the first vibration damping element.

2. Anti-vibration mount according to claim 1, further comprising at least a second damping module comprising a second enveloping surface (7c) of the first support part (7), a second enveloping surface (8c) of the second support part (8) and a second vibration damping element (33) connecting the second enveloping surface of the first support part and the second enveloping surface of the second support part, the second enveloping surface of the first support part encompassing partially the second vibration damping element and the second enveloping surface of the second support part encompassing partially the second vibration damping element, the second damping module being adjacent to the first damping module so that a longitudinal axis of the first vibration damping element and a longitudinal axis of the second vibration damping element are parallel, the longitudinal axis extending according to the length of the first and second vibration damping element, the first and second damping modules forming a first damping line (L 1).

3. Anti-vibration mount according to claim 2, further comprising at least a second damping line (L2) comprising at least a first damping module, the first damping module of the second damping line comprising a third enveloping surface of the first support part (7), a third enveloping surface (8e) of the second support part (8) and a third vibration damping element (35) connecting the third enveloping surface of the first support part and the third enveloping surface of the second support part, the third enveloping surface of the first support part encompassing partially the third vibration damping element and the third enveloping surface of the second support part encompassing partially the third vibration damping element, the first damping module of the second damping line being adjacent to the first damping module of the first damping line or to the second damping module of the first damping line so that an longitudinal axis of the third vibration damping element of the first damping module of the second damping line and the longitudinal axis of the first vibration damping element of the first damping module of the first damping line or the longitudinal axis of the second vibration damping element of the second damping module of the first damping line are coaxial, the longitudinal axis of the third vibration damping element extending according to the length of the third vibration damping element.

4. Anti-vibration mount according to any one of claims 1 to 3, wherein the first support part (7) comprises a first and a second front surfaces (7c, 7d, 8c, 8d) perpendicular to the first enveloping surface of the first support part, and the second support part comprises a first and a second front surfaces (8c, 8d) perpendicular to the first enveloping surface of the second support part, the vibration damping element (10) of each damping module connecting the first and second surfaces of the first support element and of the second support element.

5. Anti-vibration mount according to any one of claims 1 to 4, wherein the first and second support parts (7, 8) comprises vertical retaining means configured to compress and maintain compressed the vibration damping element (10) of each damping module between the first support part and the second support part.

6. Anti-vibration mount according to claim 5, wherein the vertical retaining means comprise a plurality of lateral extensions (11, 12) and connecting elements (13), each support part (7, 8) comprising at least two lateral extensions of the plurality of the lateral extensions extending from the said support part from either side of the said support part so that each lateral extension of the first support part is in front of a lateral extension of the second support part, two lateral extensions of the first and second support parts in front from each other being connected by a connecting element.

7. Anti-vibration mount according to claim 6, wherein the lateral extensions (11) of the first support part (7) comprising a through hole, the lateral extensions (12) of the second support part (8) comprise a threaded hole, and each connecting element (13) comprises a screw (14) configured be inserted in the through hole of a lateral extension of the first support part and configured to be engaged in the threaded hole of the lateral extension of the second support part in front of the lateral extension of the first support part.

8. Anti-vibration mount according to any one of claims 1 to 7, further comprising stopping means configured to maintain a predefined minimal gap value of the predetermined gap (Gp) when the damping vibration element (10) is compressed between the first support part (7) and the second support part (8).

9. Anti-vibration mount according to claim 8, wherein the stopping means comprise a plurality of through threaded holes (15) and screws (16), each screw being configured to engage in a through threaded hole, the first support part (7) comprising the through threaded holes on either side of the sides of the first support part, each screw being engaged in a through threaded hole so that the end of the screw opposed to the head screw faces the second support part (8).

10. Anti-vibration mount according to any one of claims 1 to 9, wherein the first damping module comprises a plane (P1) of symmetry passing through the first support part (7), the second support part (8) and the first vibration damping element (10), the anti-vibration mount further comprising transversal retaining means configured to limit the relative displacements of the first support part relative to the second support part to a first predetermined value (Gp3) in a first direction parallel to a first normal vector extending from a first side of the plane and a second predetermined value (Gp4) in a second direction parallel to a second normal vector extending form the second side of the plane opposed to the first side.

11. Anti-vibration mount according to claim 10, wherein the first support part (7) encompasses partially the second support part (8) on either side of the sides of the second support part, the transversal retaining means comprising threaded holes (13) on either side of the sides of the first support part oriented according to the direction perpendicular to the plane of symmetry and screws (24), each screw being engaged in a threaded hole so that the end of the screw opposed to the head screw faces the second support part.

12. Anti-vibration mount according to any one of claims 1 to 11, wherein each vibration damping element (10) is a vibration damping cylinder and each enveloping surface (7b, 7c, 7d, 8b, 8c, 8d, 8e, 8f, 8g) is cylindrical to fit a vibration damping cylinder (10).

13. Anti-vibration mount according to claim 12, wherein each vibration damping cylinder (10) is a compressed wire mesh knitted cylinder or is made of rubber.

14. Anti-vibration mount according to claim 12, wherein each vibration damping cylinder (10) comprises a first portion (25) and a second portion made (26) of steel, and a damping layer (27) made of rubber and connecting the first and the second portions.

15. Anti-vibration mount according to claim 12, wherein each vibration damping cylinder comprises a first portion (28), a second portion (29), a third portion (30), a first damping layer (31) made of rubber and a second damping layer (32) made of compressed wire mesh knitted, the first, second and third portions being made of steel, the first damping layer connecting the first portion and the second portion and the second damping layer connecting the second portion and the third portion.

**Fig.1**

**Fig.2**

## Fig.3

## Fig.4

# Fig.5

# Fig.6

## Fig.7

## Fig.8

**Fig.9**

**Fig.10**

**Fig.11**

# Fig.12

# Fig.13

## Fig.14

## Fig.15

**Fig.16**

**Fig.17**

# Fig.18

Europäisches
Patentamt

European
Patent Office

Office européen
des brevets

# EUROPEAN SEARCH REPORT

Application Number

**EP 23 20 8927**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 051 990 B2 (DEERE & CO [US]) 9 June 2015 (2015-06-09) | 1,4 | INV. |
| Y | * figure 2 * | 2,3 | F16F15/08 |
| A | | 12-15 | F16F1/44 |
| | ----- | | F16F3/087 |
| X | US 4 134 561 A (ATKINSON DAVID W ET AL) 16 January 1979 (1979-01-16) * figure 1 * | 1,5-7 | |
| | ----- | | |
| X | US 2 241 026 A (WYLIE ERNEST L) 6 May 1941 (1941-05-06) * figure 3 * | 1,8,9 | |
| | ----- | | |
| X | US 5 601 031 A (CARLSON ROBERT L [US]) 11 February 1997 (1997-02-11) | 1,10 | |
| Y | * figure 3 * | 11 | |
| | ----- | | |
| X | FR 1 484 436 A (SAREK AS) 9 June 1967 (1967-06-09) * figure 6 * | 1 | |
| | ----- | | TECHNICAL FIELDS SEARCHED (IPC) |
| X | GB 362 470 A (LEOPOLD RADO) 30 November 1931 (1931-11-30) * the whole document * | 1 | F16F |
| | ----- | | |
| Y | CN 116 591 932 A (NINGGUO RUIPU SEALS CO LTD) 15 August 2023 (2023-08-15) * figures 1,2 * | 2,3 | |
| | ----- | | |
| Y | US 2002/113349 A1 (RIVIN EVGENY I [US]) 22 August 2002 (2002-08-22) * figure 12 * | 11 | |
| | ----- | | |

The present search report has been drawn up for all claims

| Place of search | Date of completion of the search | Examiner |
|---|---|---|
| The Hague | 22 March 2024 | Beaumont, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 8927

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | | | Publication date | Patent family member(s) | | | Publication date |
|---|---|---|---|---|---|---|---|
| US | 9051990 | B2 | 09-06-2015 | CN | 103306794 | A | 18-09-2013 |
| | | | | DE | 102012203858 | A1 | 19-09-2013 |
| | | | | EP | 2639093 | A1 | 18-09-2013 |
| | | | | US | 2013241125 | A1 | 19-09-2013 |
| US | 4134561 | A | 16-01-1979 | GB | 1564790 | A | 16-04-1980 |
| | | | | JP | S5745958 | B2 | 30-09-1982 |
| | | | | JP | S53129724 | A | 13-11-1978 |
| | | | | NL | 7802793 | A | 23-10-1978 |
| | | | | US | 4134561 | A | 16-01-1979 |
| US | 2241026 | A | 06-05-1941 | NONE | | | |
| US | 5601031 | A | 11-02-1997 | AU | 681474 | B2 | 28-08-1997 |
| | | | | BR | 9501002 | A | 30-01-1996 |
| | | | | US | 5601031 | A | 11-02-1997 |
| | | | | ZA | 95980 | B | 10-10-1995 |
| FR | 1484436 | A | 09-06-1967 | BE | 683075 | A | 01-12-1966 |
| | | | | ES | 130159 | U | 01-10-1967 |
| | | | | FR | 1484436 | A | 09-06-1967 |
| | | | | GB | 1147909 | A | 10-04-1969 |
| | | | | NL | 6612741 | A | 11-03-1968 |
| GB | 362470 | A | 30-11-1931 | BE | 372360 | A | 30-08-1930 |
| | | | | FR | 699736 | A | 19-02-1931 |
| | | | | GB | 362470 | A | 30-11-1931 |
| CN | 116591932 | A | 15-08-2023 | NONE | | | |
| US | 2002113349 | A1 | 22-08-2002 | NONE | | | |

EPO FORM P0459

For more details about this annex : see Official Journal of the European Patent Office, No. 12/82

**EP 4 553 337 A1**

**Patent documents cited in the description**

- EP 2267871 A